# EUROPEAN PATENT SPECIFICATION

(11) **EP 3 102 338 B1**
(45) Date of publication and mention of the grant of the patent: **02.10.2019**
(21) Application number: 15704417.3
(22) Date of filing: 22.01.2015
(51) Int. Cl.: B60S 1/52, B05B 15/68

(54) **SPRAYING NOZZLE ARRANGEMENT FOR WINDSCREENS AND METHOD FOR ASSEMBLING SAME**
SPRÜHDÜSENANORDNUNG FÜR WINDSCHUTZSCHEIBEN UND VERFAHREN ZUR MONTAGE DAVON
AGENCEMENT DE BUSE DE PULVÉRISATION POUR PARE-BRISES ET SON PROCÉDÉ D'ASSEMBLAGE

(30) Priority: 05.02.2014 SE 1430014
(43) Date of publication of application: 14.12.2016
(73) Proprietor: Illinois Tool Works Inc., Glenview, IL 60025 (US)
(72) Inventor: ÖSTERGREN, Kristian Albert, S-44165 Alingsås (SE)
(74) Representative: HGF Limited
(86) International application number: PCT/US2015/012394
(87) International publication number: WO 2015/119777

(56) References cited:
- DE-A1- 19 746 059
- US-A1- 2008 169 358
- US-A1- 2011 101 127

## Description

### TECHNICAL FIELD

The invention relates to a spraying nozzle arrangement for cars primarily intended to be installed at the lower side of the windscreen on a part of the car, such as the hood, for supplying washer fluid to the windscreen. Although spraying of the windscreen is the main use of the present invention, it is also suitable for application of washer fluid to other surfaces of a car, such as the rear window or headlights.

### BACKGROUND ART

Today's cars are usually provided with some kind of arrangement for spraying (or flushing) the windscreen with washer fluid to clean the windscreen while driving. When the fluid has been sprayed on the windscreen, the windscreen wipers are normally activated to wipe away the washer fluid and dirt, such as fat, which has been dissolved by the fluid.

Although washer arrangements for other parts than the windscreen are relatively frequent today, for example, headlight glass and rear windows, windscreen washers are the most frequent washer arrangement. Especially for windscreen washers it is important to set the jet to that it spreads a washer fluid to desired parts to be cleaned so as not to blur visibility for the driver. The fluid should therefore be distributed over the windscreen so that it can, in collaboration with the windscreen wipers, clean the windscreen effectively. In order to effectively manage to spread the fluid correctly, it is in many cases desirable to be able to easily adjust the jet vertically. It may, for example, be an advantage to be able to fine-tune depending on how the car is normally driven. A car mostly used at relatively low speed, for example, in city traffic, probably has a better adjustment of the spraying nozzle if the jet (when stationary) hits the windscreen lower than a car mostly used at higher speeds, such as a car mostly used for highway driving. This depends on the fact that the headwind "presses down" the jet so that it hits the windscreen lower the faster the car is driven. It is therefore desirable for the driver to be able to fine-tune the settings to adapt the setting of a spraying nozzle to his or her normal driving. It can also be contemplated that the setting, which was initially well balanced, declines over time due to other factors being changed, such as fluid pressure, as a result of clogging or changed pump output, so that it is desirable to adjust the direction of the jet.

Another advantage of adjusting the settings of the spraying nozzle is that the same windscreen spraying arrangement can be used for different models in a better way. Adjustable spraying nozzles for windscreen spraying arrangements are, per se, nothing new but are a common feature. For example, a device for adjusting the direction of the jet of a spraying nozzle is known from DE 197 46 059 or from EP1946982 A2. There is, however, a wish for a windscreen spraying arrangement with adjustable spraying nozzles to be robust and possible to manufacture and assemble quickly and efficiently. Another wish is that it should be easy to adjust the setting without the setting therefore being accidentally changed, or the setting easily changing over time.

Thus, there is a remaining wish for improved washer arrangements that can fulfill the need for robust and easily assembled windscreen spraying arrangements whose spraying nozzle setting can be easily adjusted.

### GENERAL DESCRIPTION OF THE INVENTION

The invention relates to a spraying nozzle arrangement for vehicle windscreens. The spraying nozzle arrangement can also be used for other purposes on a car, for example, to spray headlights, rear windows or other surfaces that one may wish to clean on the car. The spraying nozzle arrangement comprises a spraying nozzle, a spraying nozzle attachment and an adjustment screw. The spraying nozzle attachment is intended to be attached to some part of the car's bodywork, such as on the hood. The spraying nozzle is provided with at least one hose connection intended to be attached to a hose connected to a reservoir with washer fluid in order to convey fluid from the reservoir to the spraying nozzle using a pump. The spraying nozzle is further provided with at least one spraying nozzle aperture for directed spraying of washer fluid against the desired surface on the vehicle. The spraying nozzle and the spraying nozzle attachment are arranged to be movably connected to each other and provided with an adjustment means so that the focus of the directed spraying from the spraying nozzle aperture can be adjusted with regard to at least one degree of freedom relative to said spraying nozzle attachment (6). When the spraying nozzle arrangement is attached to a car, it implies that when the adjustment means is used, the spraying nozzle will move in relation to the car because the spraying nozzle attachment is attached to the car. The adjustment means is designed so that the spraying nozzle is provided with threads or teeth which engage with screw threads of the adjustment screw so that the spraying nozzle can be adjusted by the adjustment screw being screwed. The spraying nozzle and the spraying nozzle attachment are arranged to be connected to each other via a rotatable connection so that when said spraying nozzle moves relative to said spraying nozzle attachment as a result of said adjustment screw being turned or screwed in the normal manner for screws about its longitudinal axis, a turning movement is achieved at the rotatable connection between the spraying nozzle and the spraying nozzle attachment.

Further, the adjustment screw is arranged to be spatially secured to said spraying nozzle attachment by being located in a screw holder in such a way that when the adjustment screw is screwed, said adjustment screw does not move in the screw's longitudinal direction in relation to the spraying nozzle attachment. For example, the adjustment screw can be designed as a threaded bolt or threaded pin retained by the screw holder by abutments, which, at its two ends prevent the screw from moving along its axis, i.e., in the directions in which a screw normally moves when screwed. Consequently, adjustment of the jet from the spraying nozzle is done by the adjustment screw being screwed without axially moving in relation to the spraying nozzle attachment, and, as a consequence, is also immobile in relation to a vehicle when the spraying nozzle attachment is attached to said vehicle. Thus, the adjustment screw is not affixed in a threaded bore or the like, as is commonly the case, but is held in place by walls or the like defining its position and holding the adjustment screw in place. Therefore, the arrangement makes the spraying nozzle, which engages with the threads of the adjustment screw via said teeth or threads of the spraying nozzle, move in relation to said spraying nozzle attachment when the adjustment screw is turned or screwed about its longitudinal axis.

In one embodiment of the device, the screw holder is designed as a cylinder-like structure with walls at the ends and has an opening in its side, or mantle surface, for inserting the screw. Furthermore, at least one of the end walls is provided with an opening making it possible to access an engagement at one end of the screw in order to achieve a turning movement for adjustment of the setting. The arrangement can also be designed so that the opening in the side through which the screw can be inserted is adapted so as to allow the threads of the screw to be in contact with the threads or teeth of the spraying nozzle when the spraying nozzle arrangement is fully installed for use.

Above it is mentioned that the screw holder may be cylindrical, but other shapes work as well, such as rectangular or other shapes. These can be designed in ways similar to what is described above, i.e., with a bore in the side for inserting the screw, and with abutments at the ends in order to prevent it from moving axially.

A spraying nozzle arrangement can further be designed so that the adjustment means is arranged so as to influence the relative position of the spraying nozzle and spraying nozzle attachment on a first side of said rotatable connection and that the spraying nozzle aperture is arranged on the other side of said rotatable connection. This means that the device is similar to a "rocker board" and the spraying nozzle will move in the direction opposite that of the adjustable part. According to one embodiment, the adjustment means can be designed so that it influences the spraying nozzle at one of its ends and that the spraying nozzle aperture is arranged at the other end of the spraying nozzle.

It is of course also possible to arrange both the adjustment means and the spraying nozzle aperture on the same side, and also at the same end, although it may be tight to fit both in with the spraying nozzle aperture and the adjustment means being close to each other.

As mentioned earlier, the adjustment screw is secured in the spraying nozzle arrangement by being located in a screw holder in the spraying nozzle attachment. As it should be possible to position the screw in the screw holder, the screw holder must be made either so that it has some part that can be opened for inserting the screw or so that the opening in the screw holder may be covered again in another way, or that the position of the screw in the reservoir can be adjusted during assembly so that the screw does not detach accidentally from the screw holder.

According to one embodiment, the spraying nozzle arrangement can be designed so that the screw is prevented from being released from the screw holder by the spraying nozzle covering the opening through which the screw was inserted, for example, by the threads or teeth of the spraying nozzle engaging with screw threads of said adjustment screw. The fact that the screw tightly abuts the threads or teeth of the spraying nozzle, for example, a toothed cam, has the advantage that the screw runs less of a risk of turning accidentally, thereby changing the setting of the spraying nozzle.

To achieve a good engagement between the threads of the screw and the teeth of the spraying nozzle, it may be desirable for the screw and the teeth to be of different hardness. According to the invention the adjustment screw is made from a material that is softer than the spraying nozzle and/or the spraying nozzle attachment. It is normally desirable for the spraying nozzle attachment and the spraying nozzle to be made from relatively hard material in order to be non-deformable and durable, which is why it is normally most advantageous to make the screw softer.

To further ensure the engagement between the spraying nozzle and the adjustment screw, the teeth of the spraying nozzle may be located on a surface that is slightly arched, convex towards the screw, so that the engagement of the teeth remains largely the same during the turning movement of the spraying nozzle. Another possibility is to adapt the height of the teeth so that the engagement is maintained during the rotary movement, i.e., that the play between the distal ends of the teeth engaging with the threads of the screw remains largely the same during the rotary movement.

Also, the invention further relates to a method for assembling a spraying nozzle arrangement according to the above. The method comprises the steps of:
- Assembling the spraying nozzle with said spraying nozzle attachment at the rotatable connection and placing the adjustment screw in the screw holder. Which one of these steps is performed first has no major importance.

When the screw is in place and the spraying nozzle and the spraying nozzle attachment are joined together at the rotatable connection, the next step is performed, which is
- Turning the spraying nozzle in relation to the spraying nozzle attachment at the rotatable connection until the teeth or threads of the spraying nozzle arrive at a position where they start engaging with the screw threads of the adjustment screw. This means that the spraying nozzle and the spraying nozzle attachment are placed in a position so that screwing of the adjustment screw can start, thus making it possible to adjust the setting of the spraying nozzle. This step is followed by
- The adjustment screw (70) being screwed so that its engagement with the teeth or threads of the spraying nozzle increases until the spraying nozzle (5) has been turned in relation to the spraying nozzle attachment (6) at the rotatable connection so that a desired relative position between the spraying nozzle (5) and the spraying nozzle attachment (6) has been reached.

In this position, the adjustment screw is prevented from detaching from the screw holder by the spraying nozzle. Consequently, the spraying nozzle can easily be assembled into a finished unit with a desired adjustment of the spraying nozzle, in order to be installed in a vehicle.

### DRAWINGS

- Figure 1: shows a schematic view of a car with a windscreen spraying arrangement;
- Figures 2A-2C: show a windscreen spraying arrangement comprising a spraying nozzle arrangement, a protective cover and hoses for supplying washer fluid before installation on a car;
- Figures 3a-3b: show an exploded view of the spraying nozzle arrangement of Figures 2a-2c comprising a spraying nozzle, a spraying nozzle attachment and an adjustment screw;
- Figures 4a-4b: show various views of the spraying nozzle attachment of Figures 3a-3b;
- Figures 5a-5c: show various steps of the assembly of a spraying nozzle arrangement comprising a spraying nozzle, a spraying nozzle attachment and an adjustment screw.

### DETAILED DESCRIPTION OF THE INVENTION

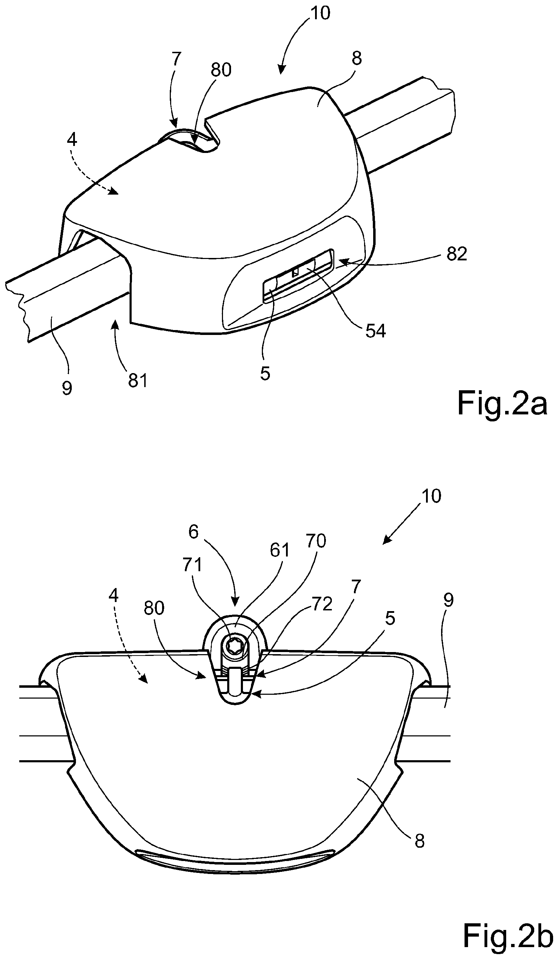

In the figure descriptions, references will in some case be made to different relative directions or positions. These are defined with reference to Figure 2a, for example, that the top, or upper part, of the windscreen spraying arrangement 10 (and of the spraying nozzle arrangement 4), will be defined as the side that is covered by the large and relatively planar surface of the protective cover 8 facing upwards in Figure 2a. The bottom, or lower part, of the windscreen spraying arrangement 10, is defined as the opposite side. This side may also be referred to as the base surface since it is the surface intended to be attached to the car 1, for example, on the underside of the hood 2. The front, or front part, of the windscreen spraying arrangement 10 is defined as the side where the spraying nozzle aperture 54 is located, and the back, or rear part, as the opposite side where the adjustment means 7 is located. The sides are the parts between the front and back, where the hoses 9 are connected through hose openings 81.

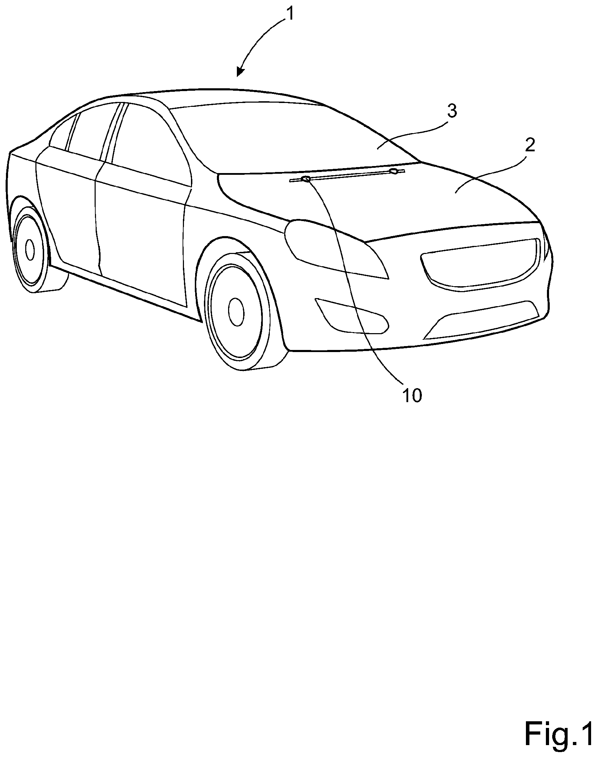

Figure 1 schematically shows a car 1 with a hood 2 and a windscreen 3. The car further comprises a windscreen spraying arrangement 10 installed onto the car 1 by being attached with its base surface on the underside of the hood 2.

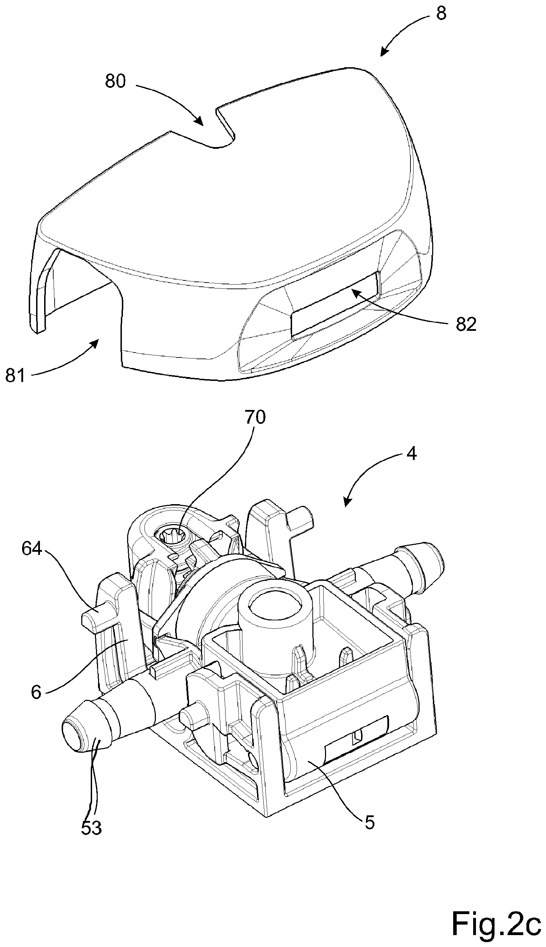

The windscreen spraying arrangement 10, which is shown in more detail in Figure 2, is mounted so that it can supply a washer fluid to the windscreen 3, for example, by the windscreen spraying arrangement 10 being mounted so that it can spray washer fluid through a gap between the hood 3 and the bodywork of the car or openings in the hood 3.

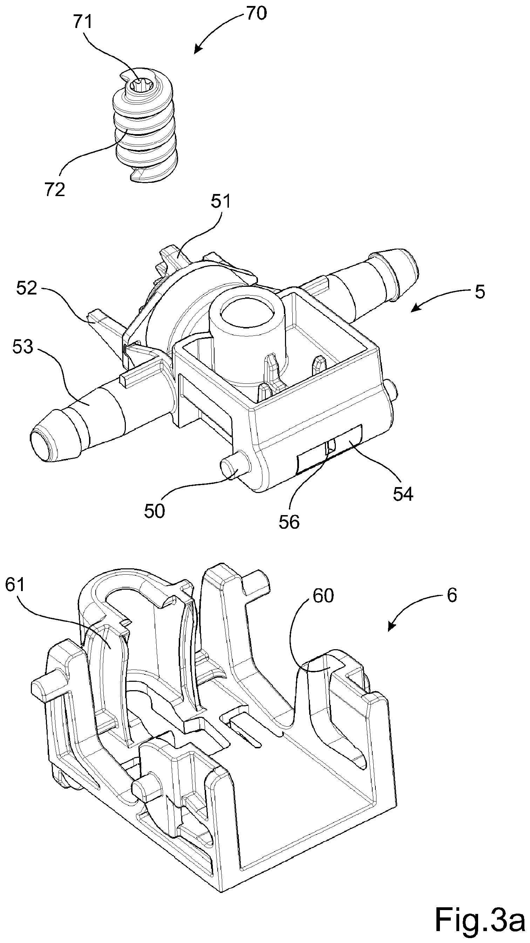

Figures 2a-c show the parts included in the windscreen spraying arrangement 10 intended to be used in the car 1 of Figure 1, and Figure 3a shows the parts included in the spraying nozzle arrangement 4, which is the central part of the invention. In the following, the function of the windscreen spraying arrangement 10 in general and the spraying nozzle arrangement 4 in particular will be described with reference primarily to Figures 1 through 3b.

Figure 2a shows an isometric view of the windscreen spraying arrangement 10. The windscreen spraying arrangement 10 comprises a spraying nozzle arrangement 4 covered by a protective cover 8 and connected to hoses 9 for supplying washer fluid. Mounted onto a car 1, the hoses 9 are, in a professional manner, connected to a reservoir (not shown) with washer fluid and a pump (not shown) for pumping fluid at a pressure to the spraying nozzle arrangement 4. The protective cover 8 is provided with an adjustment opening 80 in its rear part, hose openings 81 in its sides and a washer opening 82 in its front part. It appears from Figure 2a that the hoses 9 can be inserted through the sides of the protective cover 8 and attached to the spraying nozzle arrangement 4, and that a spraying nozzle aperture 54 of the spraying nozzle 5 is visible through a washer opening 82 in the front part of the windscreen spraying arrangement 10, through which washer fluid can be sprayed. Through the adjustment opening 80, it is possible to access and set the adjustment means 7.

The washer opening 82 is designed to be big enough to enable adjustment of the setting of the spraying nozzle 5 vertically while the fluid should still be able to spray unhindered through the washer opening 82. Vertically refers to a direction that, in Figure 2a, is substantially orthogonal to the upper planar surface of the protective cover 9. The purpose of the adjustability is to enable adjustment of the spraying nozzle 5 when the spraying nozzle arrangement 4 is mounted onto a car 1 so that the focus of the washer fluid jet from the spraying nozzle 5 can be adjusted vertically onto the windscreen 3 so that the fluid hits the windscreen 3 at different height levels, i.e., closer to or further from the lower part of the windscreen 3 by the hood 2.

The adjustability of the spraying nozzle 5 is shown better in Figure 2b, which shows the windscreen spraying arrangement 10 seen from above. Through the adjustment opening 80 in the central rear part and top of the protective cover 8 it is possible to access the adjustment means 7 and consequently change the spraying focus of the spraying nozzle arrangement 4 vertically onto the windscreen 3 (see Figure 1). The adjustment means 7 comprises an adjustment screw 70, provided with a screw grip 71 (in this case an Allen socket) and screw threads 72, and a toothed cam 51 which is part of the spraying nozzle 5. The adjustment screw 70, which in this case is designed as a threaded pin or screw-in pin of uniform thickness, is pivotably retained in a screw holder 61 which is part of a spraying nozzle attachment 6. The adjustment screw 70 is thus retained by the screw holder 61 so that it can be turned but not move vertically, i.e., in a direction orthogonal to the plane of the drawing in Figure 2b, when subjected to a torque about an axis orthogonal to the plane of the drawing, i.e., when the adjustment screw 70, in the normal manner for screws, is screwed with a turning movement about its longitudinal axis. The adjustment screw 70 is also prevented from moving laterally by the side walls of the screw holder 61 and from moving forward or backward by the rear wall of the screw holder and the toothed cam 51 of the spraying nozzle 5, which prevents the adjustment screw 70 from moving forward. Thus, the adjustment screw 70 is secured in a specific position in the spraying nozzle attachment 6 when the arrangement is mounted on a car and its only degree of freedom is that it can be screwed. The toothed cam 51 engages with the screw threads 72 of the adjustment screw 70, whereby, when the adjustment screw 70 is turned, the toothed cam 51, and consequently the spraying nozzle 5, will move in relation to the spraying nozzle attachment 6 so that the spraying nozzle aperture 54 in the front part of the spraying nozzle 5 will adjust its setting.

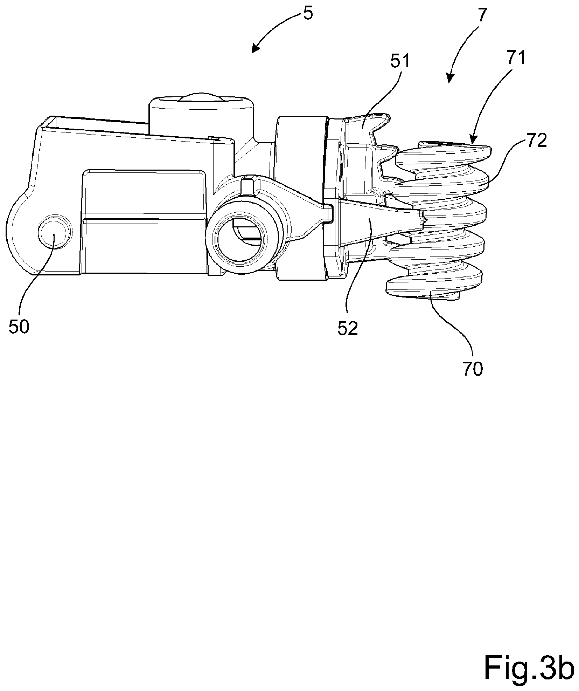

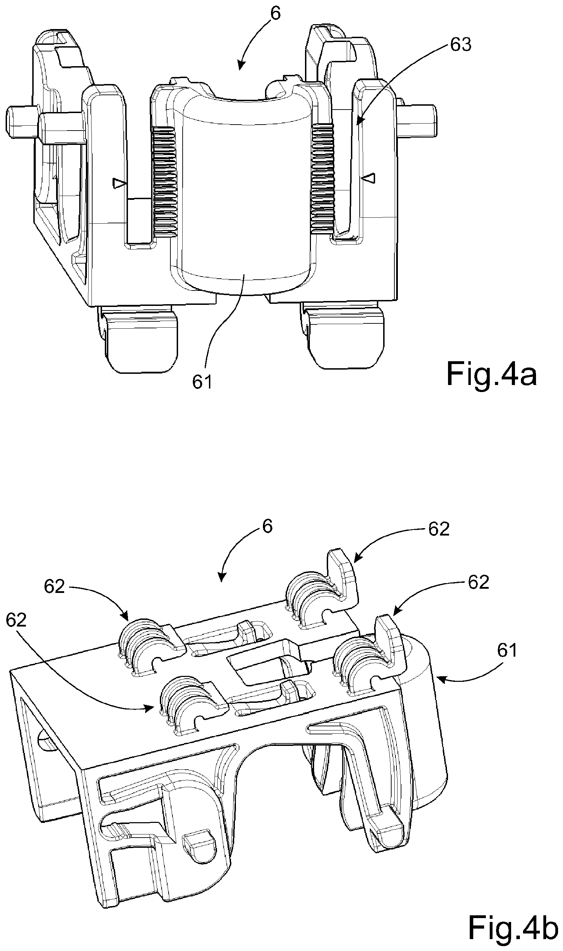

In the following, the movement in the spraying nozzle arrangement 4 will be described primarily with reference to Figures 2c and 3a-b. In Figure 2c the protective cover 8, with its adjustment opening 80, hose openings 81 and washer opening 82, has been removed from the spraying nozzle arrangement 4. Therefore, in the spraying nozzle arrangement 4, it is easier to see its different parts, consisting of the spraying nozzle 5, the spraying nozzle attachment 6 and the adjustment screw 70, and in Figure 3a the spraying nozzle arrangement 4 has been separated so that its different parts can easily be distinguished from each other. The spraying nozzle arrangement 4 is arranged so that, depending on the direction in which the adjustment screw 70 is turned, the rear part of the spraying nozzle 5, at the toothed cam 51 (see Figure 3a), will move upward or downward in relation to the spraying nozzle attachment 6. The movement of the rear part of the spraying nozzle 5 and the toothed cam 51 causes the spraying nozzle 5 to turn at its fastening pins 50, which comprise a pivotable fastening to the spraying nozzle attachment 6 in fastening grooves 60. It should be appreciated that it is the very function of a pivotable fastening that is the essential feature, and that it can be realized in several different ways; for example, it can be done so that there are fastening pins on the spraying nozzle attachment instead, and corresponding fastening grooves on the spraying nozzle. The turning movement results in the fluid jet from the spraying nozzle aperture 54, which is located in the front part of the spraying nozzle 5, being adjusted downward or upward in relation to the spraying nozzle attachment 6 by the movement. The spraying nozzle aperture 54 will move in the opposite direction in relation to the movement of the toothed cam 51 because the spraying nozzle aperture 54 and the toothed cam 51 are located on different sides of the fastening pins 50 comprising the pivot point. This is perhaps best illustrated in Figure 3b, which shows a side elevational view of the adjustment screw 70 and the spraying nozzle 5. The adjustment screw 70 and the toothed cam 51 comprise the essential parts of the adjustment means 7. Since the adjustment screw 70 is spatially secured in the screw holder 61 (not shown in Figure 3b) but can be turned, the toothed cam 51 will to move up or down, and a turning movement is achieved with the fastening pins 50 as the rotation center. Thus, an important characteristic of the screw holder 61 is that it essentially prevents the adjustment screw 70 from moving in relation to the spraying nozzle attachment 6 in a direction parallel to the longitudinal axis of the adjustment screw 70, i.e., the direction in which a screw normally moves when screwed. Consequently, it is easily noticed in Figure 3b that an upward movement of the toothed cam 51 and the rear part of the spraying nozzle 5 will result in a downward movement of the spraying nozzle aperture 54 and the front part of the spraying nozzle 5, and vice versa. From this it can be appreciated that a pair of position indicators 52 will move in relation to the adjustment screw 70 and consequently also the spraying nozzle attachment 6. Figure 4a shows that the rear part of the spraying nozzle attachment 6 is provided with recesses adapted to let the position indicators 52 protrude therethrough so that they can easily be read against a position indicator scale 63 located in the rear part of the spraying nozzle attachment 6 at the screw holder 61. In this case it is possible to indicate, as in Figure 4a, for example with arrows, where the normal setting should be for a proper adjustment of the washer fluid focus.

Figure 2c, where the protective cover 8 has been lifted off the spraying nozzle arrangement 4, shows for the sake of completeness also protective-cover attachments 64, which form part of the spraying nozzle attachment 6, and hose connections 53, which form part of the spraying nozzle 5. How these are designed is no essential part of the invention. The existence of some type of connection to a hose is necessary for the spraying nozzle arrangement to function, but exactly how they look or to which part of the spraying nozzle arrangement they are connected can vary. A protective cover is desirable but not necessary, and consequently these attachments are not necessary either.

Likewise, to show the possible attachments of the spraying nozzle arrangement 4 onto a car 1, Figure 4b shows the bottom or base surface of the spraying nozzle attachment 6, which has been provided with hook attachments 62 intended to be slid firmly into openings made for such purpose in sheet-metal parts of a car 1, for example, in the hood 2. It will also be appreciated that these attachments have nothing directly to do with the adjustment of the washer jet, but those skilled in the art can choose other options of attaching the windscreen spraying arrangement 10 to a car 1. Not even fasteners on the windscreen spraying arrangement 10 are necessary, but it can, for example, be glued or clamped to relevant parts without the need for special fasteners.

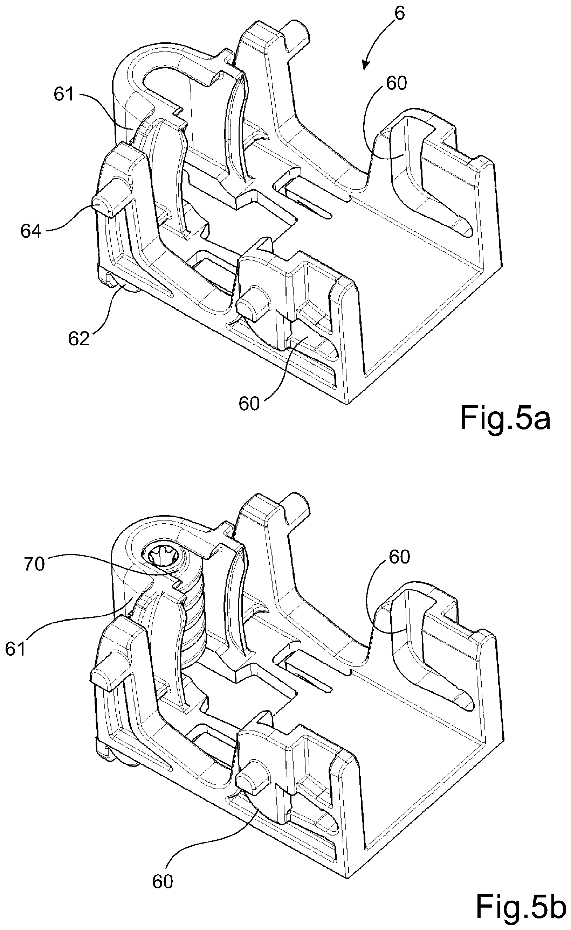

Figures 5a-5c show how the spraying nozzle arrangement 4 can easily be assembled into a finished unit. Figure 5a shows the spraying nozzle attachment 6, which can be manufactured as a unit by, for example, injection molding with an integrated screw holder 61 and fastening grooves 60. Further details such as hook attachments 62 and protective-cover attachments 64 are of course possible. Although it is possible to manufacture the spraying nozzle attachment 6 as a single integrated unit, it can of course be assembled from several elements and have more integrated functions. However, the necessary characteristics required by the spraying nozzle attachment 6 are some type of device for retaining an adjustment screw 70 in a fixed position but allowing it to turn (be screwed), and for being adapted to pivotably secure a spraying nozzle 5.

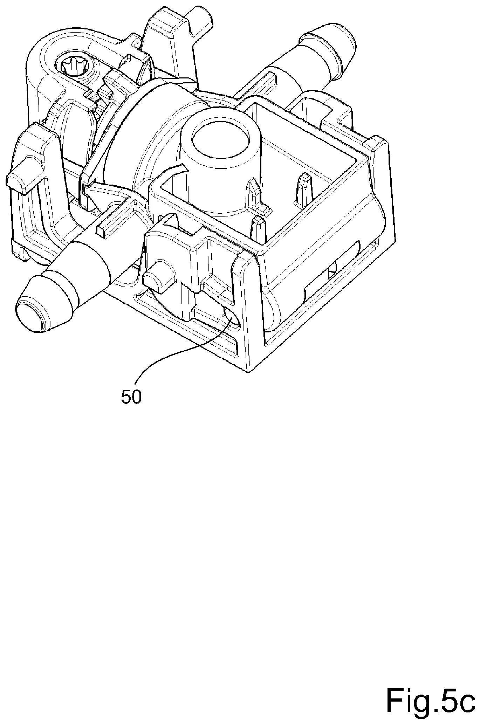

Figure 5b shows how an adjustment screw 70 has been placed into the screw holder 61. When the adjustment screw is in place, the spraying nozzle 5 can then be put in place by inserting associated fastening pins 50 into the fastening grooves 60 so that the spraying nozzle 5 is pivotably connected to the spraying nozzle attachment 6. When the spraying nozzle 5 is then pivotably connected to the spraying nozzle attachment 6, it can finally be placed in its proper position by being screwed into place by the adjustment screw 70, which is screwed until the spraying nozzle 5 has been rotated about the fastening at the fastening pins 50 to its desired position (see Figure 5c).

It can be noted that it is also possible to affix the spraying nozzle in the pivotable fastening with the fastening pins 50 and the fastening grooves 60 before the adjustment screw 70 is placed in the screw holder 61. The final step, to put the spraying nozzle 5 in place by screwing the adjustment screw 70 so that the spraying nozzle 5 clamps the adjustment screw 70 in the screw holder 61, however, comprises the final assembly step of this embodiment.

It is of course possible to arrange the pivotable fastening in any other way, letting the spraying nozzle slide into some sort of snap fastening. In most cases, however, this is a poorer solution which entails either increased risk of the fastening coming off in an undesired way, or there being elements that may be worn out or broken during assembly.

## Claims

1. A spraying nozzle arrangement (4) for vehicle (1) windscreens (3) comprising a spraying nozzle (5), a spraying nozzle attachment (6) and an adjustment screw (70), said spraying nozzle (5) provided with at least one hose connection (53) and at least one spraying nozzle aperture (54) for directed spraying of washer fluid, said spraying nozzle (5) and spraying nozzle attachment (6) arranged to be movably connected to one another and provided with an adjustment means (7) so that the focus of the directed spraying from the aperture (54) can be adjusted with respect to at least one degree of freedom relative to said spraying nozzle attachment (6), said adjustment means (7) comprising that said spraying nozzle (5) is provided with threads or teeth which engage with screw threads (72) on said adjustment screw (70) and that said spraying nozzle (5) is arranged to be connected to the spraying nozzle attachment (6) by a rotatable connection so that a turning movement at the rotatable connection between said spraying nozzle (5) and said spraying nozzle attachment (6) is achieved when said spraying nozzle (5) moves relative said spraying nozzle attachment (6) due to turning or screwing of the adjustment screw (70) about its longitudinal axis,
wherein said adjustment screw (70) is arranged to be spatially fixed to said spraying nozzle attachment (6) by being placed in a screw holder (61) in such a way that when said adjustment screw (70) is turned, said adjustment screw will not move relative to said spraying nozzle attachment in the longitudinal direction of the screw but causes said spraying nozzle (5), which via said teeth or threads on said spraying nozzle (5) engages with the screw threads of said adjustment screw (70), to move relative to said spraying nozzle attachment (6) when said adjustment screw (70) is turned or screwed about its longitudinal axis, **characterized in that** the adjustment screw (70) is made of a material softer than the spraying nozzle (5) and/or the spraying nozzle attachment (6).

2. A spraying nozzle arrangement (4) according to claim 1, **characterized in that** said adjustment means (7) is arranged to influence the relative position of said spraying nozzle (5) and spraying nozzle attachment (6) at a first side of said rotatable connection and that said spraying nozzle aperture (54) is arranged on the other side of said rotatable connection.

3. A spraying nozzle arrangement (4) according to claim 2 **characterized in that** said adjustment means (7) is arranged to influence the spraying nozzle (5) at a first, rear end and that said spraying nozzle aperture (54) is arranged at a second, forward end of said spraying nozzle (5), so that they are placed at different sides of said rotatable connection between the spraying nozzle (5) and the spraying nozzle attachment (6).

4. A spraying nozzle arrangement (4) according to any of the preceding claims, **characterized in that** the adjustment screw (70), which is placed in said screw holder (61) in said spraying nozzle attachment (6), is prevented from being released from said screw holder by those threads or teeth on said spraying nozzle (5) which engage with screw threads (72) on said adjustment screw (70).

5. A method for assembling a spraying nozzle arrangement (4) according to any of the preceding claims, comprising the following steps:
• mounting said spraying nozzle (5) to said spraying nozzle attachment (6) at said rotatable connection and placing said adjustment screw (70) in said screw holder (61) adapted for said adjustment screw;
• turning said spraying nozzle (5) relative to the spraying nozzle attachment (6) at said rotatable connection until the teeth or threads of said spraying nozzle (5) are in a position wherein they begin to engage with the screw threads (72) of the adjustment screw (70);
• screwing said adjustment screw (70) to increase its engagement with the teeth or threads of said spraying nozzle (5) and screwing said adjustment screw (70) until said spraying nozzle (5) has been turned relative to the spraying nozzle attachment (6) at said rotatable connection so that a desired relative position between said spraying nozzle (5) and said spraying nozzle attachment is reached wherein said adjustment screw (70) is prevented from being released from said screw holder (61).

## Patentansprüche

1. Sprühdüsenanordnung (4) für Windschutzscheiben (3) von Fahrzeugen (1), eine Sprühdüse (5), eine Sprühdüsenbefestigung (6) und eine Einstellschraube (70) umfassend, wobei die Sprühdüse (5) mit mindestens einem Schlauchanschluss (53) und mindestens einer Sprühdüsenöffnung (54) zum gezielten Sprühen von Waschfluid versehen ist, wobei die Sprühdüse (5) und die Sprühdüsenbefestigung (6) dazu angeordnet sind, beweglich miteinander verbunden zu sein und mit einer Einstelleinrichtung (7) versehen zu sein, sodass der Fokus des gezielten Sprühens aus der Öffnung (54) in Bezug zu mindestens einem Freiheitsgrad in Bezug zur Sprühdüsenbefestigung (6) angepasst werden kann, wobei die Einstelleinrichtung (7) umfasst, dass die Sprühdüse (5) mit einem Gewinde oder Zähnen versehen ist, die in ein Schraubgewinde (72) an der Einstellschraube (70) eingreifen, und dass die Sprühdüse (5) dazu angeordnet ist, über eine drehbare Verbindung mit der Sprühdüsenbefestigung (6) verbunden zu werden, sodass eine Drehbewegung an der drehbaren Verbindung zwischen der Sprühdüse (5) und der Sprühdüsenbefestigung (6) erreicht wird, wenn sich die Sprühdüse (5) durch Drehen oder Schrauben der Einstellschraube (70) um ihre Längsachse in Bezug zur Sprühdüsenbefestigung (6) bewegt,
wobei die Einstellschraube (70) angeordnet ist, räumlich an der Sprühdüsenbefestigung (6) fixiert zu sein, indem sie derart in einer Schraubenhalterung (61) platziert wird, dass, wenn die Einstellschraube (70) gedreht wird, sich die Einstellschraube in Bezug zur Sprühdüsenbefestigung in Längsrichtung der Schraube nicht bewegen wird, sondern bewirkt, dass die Sprühdüse (5) über die Zähne oder das Gewinde an der Sprühdüse (5) in das Schraubgewinde der Einstellschraube (70) eingreift, um sich in Bezug zur Sprühdüsenbefestigung (6) zu bewegen, wenn die Einstellschraube (70) um ihre Längsachse gedreht oder geschraubt wird,
**dadurch gekennzeichnet, dass** die Einstellschraube (70) aus einem Material gefertigt ist, das weicher als die Sprühdüse (5) und/oder die Sprühdüsenbefestigung (6) ist.

2. Sprühdüsenanordnung (4) nach Anspruch 1, **dadurch gekennzeichnet, dass** die Einstelleinrichtung (7) dazu angeordnet ist, die relative Position der Sprühdüse (5) und der Sprühdüsenbefestigung (6) auf einer ersten Seite der drehbaren Verbindung zu beeinflussen, und dass die Sprühdüsenöffnung (54) auf der anderen Seite der drehbaren Verbindung angeordnet ist.

3. Sprühdüsenanordnung (4) nach Anspruch 2, **dadurch gekennzeichnet, dass** die Einstelleinrichtung (7) dazu angeordnet ist, die Sprühdüse (5) an einem ersten, hinteren Ende zu beeinflussen, und dass die Sprühdüsenöffnung (54) an einem zweiten, vorderen Ende der Sprühdüse (5) angeordnet ist, sodass sie auf unterschiedlichen Seiten der drehbaren Verbindung zwischen der Sprühdüse (5) und der Sprühdüsenbefestigung (6) platziert sind.

4. Sprühdüsenanordnung (4) nach einem der vorstehenden Ansprüche, **dadurch gekennzeichnet, dass** die Einstellschraube (70), die in der Schraubenhalterung (61) in der Sprühdüsenbefestigung (6) platziert ist, durch das Gewinde oder die Zähne an der Sprühdüse (5), die in das Schraubgewinde (72) an der Einstellschraube (70) eingreifen, daran gehindert wird, von der Schraubenhalterung gelöst zu werden.

5. Verfahren zum Zusammenbau einer Sprühdüsenanordnung (4) nach einem der vorstehenden Ansprüche, die Folgenden Schritte umfassend:
• Montieren der Sprühdüse (5) an der Sprühdüsenbefestigung (6) an der drehbaren Verbindung und Platzieren der Einstellschraube (70) in der für die Einstellschraube eingerichteten Schraubenhalterung (61) ;
• Drehen der Sprühdüse (5) in Bezug zur Sprühdüsenbefestigung (6) an der drehbaren Verbindung, bis die Zähne oder das Gewinde der Sprühdüse (5) in einer Position sind, an der sie beginnen, in das Schraubgewinde (72) der Einstellschraube (70) einzugreifen;
• Schrauben der Einstellschraube (70), um den Eingriff mit den Zähnen oder dem Gewinde der Sprühdüse (5) zu erhöhen und Schrauben der Einstellschraube (70), bis die Sprühdüse (5) in Bezug zur Sprühdüsenbefestigung (6) an der drehbaren Verbindung derart gedreht wurde, dass eine gewünschte relative Position zwischen der Sprühdüse (5) und der Sprühdüsenbefestigung erreicht wurde, wobei die Einstellschraube (70) daran gehindert wird, sich von der Schraubenhalterung (61) zu lösen.

## Revendications

1. Agencement de buse de pulvérisation (4) pour parebrise (3) de véhicule (1), comprenant une buse de pulvérisation (5), une fixation de buse de pulvérisation (6) et une vis de réglage (70), ladite buse de pulvérisation (5) étant pourvue d'au moins une connexion de tuyau (53) et d'au moins une ouverture de buse de pulvérisation (54) pour diriger un jet de liquide de lavage, ladite buse de pulvérisation (5) et ladite fixation de buse de pulvérisation (6) étant agencées de manière à être connectées de façon déplaçable l'une à l'autre, et étant pourvues de moyens de réglage (7) de telle sorte que le foyer du jet dirigé à partir de l'ouverture (54) puisse être réglé d'au moins un degré de liberté par rapport à ladite fixation de buse de pulvérisation (6), lesdits moyens de réglage (7) comprenant que ladite buse de pulvérisation (5) est pourvue de filets ou de dents qui s'engagent avec des filets de vis (72) sur ladite vis de réglage (70), et en ce que ladite buse de pulvérisation (5) est agencée de manière à être connectée à la fixation de buse de pulvérisation (6) par une connexion rotative de telle sorte qu'un mouvement de rotation au niveau de la connexion rotative entre ladite buse de pulvérisation (5) et ladite fixation de buse de pulvérisation (6) soit effectué lorsque ladite buse de pulvérisation (5) se déplace par rapport à ladite fixation de buse de pulvérisation (6) sous l'effet de la rotation ou du vissage de la vis de réglage (70) autour de son axe longitudinal,
dans lequel ladite vis de réglage (70) est agencée de manière à être fixée spatialement à ladite fixation de buse de pulvérisation (6) en étant placée dans un support de vis (61) d'une manière telle que lorsque ladite vis de réglage (70) est tournée, ladite vis de réglage ne se déplace pas par rapport à ladite fixation de buse de pulvérisation dans la direction longitudinale de la vis, mais amène ladite buse de pulvérisation (5), qui par l'intermédiaire desdit(e)s filets ou dents sur ladite buse de pulvérisation (5) s'engage avec les filets de vis de ladite vis de réglage (70), à se déplacer par rapport à ladite fixation de buse de pulvérisation (6) lorsque ladite vis de réglage (70) est tournée ou vissée autour de son axe longitudinal,
**caractérisé en ce que** la vis de réglage (70) est constituée d'un matériau qui est plus tendre que la buse de pulvérisation (5) et/ou la fixation de buse de pulvérisation (6).

2. Agencement de buse de pulvérisation (4) selon la revendication 1, **caractérisé en ce que** lesdits moyens de réglage (7) sont agencés de manière à influencer la position relative de ladite buse de pulvérisation (5) et de la fixation de buse de pulvérisation (6) d'un premier côté de ladite connexion rotative, et **en ce que** ladite ouverture de buse de pulvérisation (54) est agencée de l'autre côté de ladite connexion rotative.

3. Agencement de buse de pulvérisation (4) selon la revendication 2, **caractérisé en ce que** lesdits moyens de réglage (7) sont agencés de manière à influencer la buse de pulvérisation (5) au niveau d'une première extrémité arrière, et **en ce que** ladite ouverture de buse de pulvérisation (54) est agencée au niveau d'une seconde extrémité avant de ladite buse de pulvérisation (5), de telle sorte qu'ils soient placés sur différents côtés de ladite connexion rotative entre la buse de pulvérisation (5) et la fixation de buse de pulvérisation (6).

4. Agencement de buse de pulvérisation (4) selon l'une quelconque des revendications précédentes, **caractérisé en ce que** la vis de réglage (70), qui est placée dans ledit support de vis (61) dans ladite fixation de buse de pulvérisation (6), est empêchée d'être libérée dudit support de vis par les filets ou dents sur ladite buse de pulvérisation (5) qui s'engagent avec des filets de vis (72) sur ladite vis de réglage (70).

5. Procédé pour assembler un agencement de buse de pulvérisation (4) selon l'une quelconque des revendications précédentes, comprenant les étapes suivantes:
monter ladite buse de pulvérisation (5) sur ladite fixation de buse de pulvérisation (6) au niveau de ladite connexion rotative et placer ladite vis de réglage (70) dans ledit support de vis (61) adapté pour ladite vis de réglage;
tourner ladite buse de pulvérisation (5) par rapport à la fixation de buse de pulvérisation (6) au niveau de ladite connexion rotative jusqu'à ce que les dents ou les filets de ladite buse de pulvérisation (5) se trouvent dans une position dans laquelle ils/elles commencent à s'engager avec les filets de vis (72) de la vis de réglage (70); et
visser ladite vis de réglage (70) dans le but d'augmenter son engagement avec les dents ou les filets de ladite buse de pulvérisation (5) et visser ladite vis de réglage (70) jusqu'à ce que ladite buse de pulvérisation (5) ait été tournée par rapport à la fixation de buse de pulvérisation (6) au niveau de ladite connexion rotative de telle sorte qu'une position relative souhaitée entre ladite buse de pulvérisation (5) et ladite fixation de buse de pulvérisation soit atteinte, position dans laquelle ladite vis de réglage (70) est empêchée d'être libérée dudit support de vis (61) .
